# EUROPÄISCHE PATENTANMELDUNG

(11) **EP 4 342 299 A2**
(43) Veröffentlichungstag der Anmeldung: **27.03.2024**
(21) Anmeldenummer: 23194967.8
(22) Anmeldetag: 01.09.2023
(51) Int. Cl.: A21C 3/08, A21C 3/10, A21C 9/08, A21C 11/00

(54) **ANORDNUNG UND VERFAHREN ZUR FORMUNG EINES RINGKÖRPERS**

(30) Priorität: 02.09.2022 DE 102022122265
(71) Anmelder: Möller, Matthias, 63694 Limeshain (DE)
(72) Erfinder: Möller, Matthias, 63694 Limeshain (DE)
(74) Vertreter: Stoffregen, Hans-Herbert

(57) **Zusammenfassung**

Die Erfindung bezieht sich auf ein Verfahren und eine Anordnung (10) zur Formung eines Ringkörpers (36), umfassend eine Einrichtung (16) zur Herstellung zumindest eines Materialstrangs (28), eine den zumindest einen Materialstrang in Strangabschnitte unterteilende Trenneinrichtung, eine sukzessiv Strangabschnitte transportierende erste Fördereinrichtung (30), eine der ersten Fördereinrichtung nachgeordnete Formeinrichtung (34) mit einem drehbar ausgebildeten Trägerelement mit Auflagefläche für einen Strangabschnitt und eine zweite Fördereinrichtung, die für den Strangabschnitt einen einen Kreisbogenabschnitt folgenden und oberhalb der Auflagefläche verlaufenden Kontaktbereich bildet, wobei der Kreisbogenabschnitt einen Krümmungsradius aufweist, der den Außenradius des Ringkörpers vorgibt.

## Beschreibung

Die Erfindung bezieht sich auf eine Anordnung zur Formung eines Ringkörpers, insbesondere Teigrings, wie Sesam-Kringel.

Auch nimmt die Erfindung Bezug auf ein Verfahren zur Herstellung eines eine Ringform aufweisenden Körpers aus einem teigförmigen Material, insbesondere eines für ein Backgut bestimmten Teigrings, wie Sesam-Kringel, Nuss- oder Mandelzopf in Ringform.

Der DE 10 2004 026 387 B4 sind ein Verfahren und eine Vorrichtung zur Formung eines backfertigen, schlusslosen Teigrings sowie ein Verfahren zur Herstellung eines Ringgebäcks aus einem derart vorgeformten Teigring zu entnehmen. Dabei wird auf einen Teigling von zwei Seiten zur Ausformung eines Rundstücks ein Druck ausgeübt. Nach dem Entspannen des gedrückten Teiglings wird ein Innenloch zur Herstellung des Teigrings ausgestanzt.

Ein Verfahren zur Herstellung von Kaffeegebäck und eine Maschine zur Ausführung des Verfahrens werden in der DE 2 333 444 A beschrieben. Dabei werden Teigstränge gebildet, abgelängt und anschließend in kreisrunde Formen in Form von Teigringen abgelegt.

Der WO 2010/054773 A2 ist eine Anlage zur automatischen Herstellung von Backgut unter Verwendung eines Teigstrangs zu entnehmen. Die Anlage umfasst eine Kneteinrichtung, einen Extruder, eine Portioniereinrichtung und eine Nachbearbeitungsvorrichtung, in der Teigstrangabschnitte in eine Transportform übergeben werden, in der die Teigstrangabschnitte gegärt und gebacken werden.

Auch wenn Anlagen zur Herstellung von Backgut bereits teilautomatisiert arbeiten, ist die Möglichkeit zur Herstellung eines ringförmigen Backgutes ohne Verwendung einer die Ringform vorgebenden Form nicht möglich. Manuelle Tätigkeiten sind erforderlich, die den Nachteil zeigen, dass die Enden eines zu einem Ring zu formenden Teigstranges häufig nicht derart bündig ineinander übergehen, dass ein Überstehen und damit dunkle Hitzestellen vermieden werden.

Der vorliegenden Erfindung liegt die Aufgabe zugrunde, eine Anordnung und ein Verfahren zur Herstellung eines Ringkörpers, insbesondere eines Teigrings, zur Verfügung zu stellen, der formschön herstellbar ist und bei dem die Stoßstellen bündig ineinander übergehen.

Auch soll nach einem weiteren Aspekt die Möglichkeit gegeben sein, mehrsträngige Ringkörper, bei denen Teigstränge miteinander verbunden bzw. geflochten oder verdrillt sind, gleichermaßen in unterschiedlichen Größen und -verhältnissen herstellen zu können.

Der Durchsatz der herzustellenden Ringkörper soll im Vergleich zu vorbekannten Anlagen vergrößert sein.

Zur Lösung einer oder mehrerer zuvor genannter Aspekte wird vorgeschlagen eine Anordnung zur Formung eines Ringkörpers, insbesondere Teigrings, wie Sesam-Kringel, umfassend
- eine Einrichtung zur Herstellung zumindest eines Materialstrangs,
- eine den zumindest einen Materialstrang in Strangabschnitte unterteilende Trenneinrichtung,
- eine sukzessiv Strangabschnitte transportierende erste Fördereinrichtung,
- eine der ersten Fördereinrichtung nachgeordnete Formeinrichtung mit einem drehbar ausgebildeten Trägerelement mit Auflagefläche für einen Strangabschnitt und
- eine zweite Fördereinrichtung, die für den Strangabschnitt einen einen Kreisbogenabschnitt folgenden und oberhalb der Auflagefläche verlaufenden Kontaktbereich bildet, wobei der Kreisbogenabschnitt einen Krümmungsradius aufweist, der Außenradius des Ringkörpers vorgibt.

Erfindungsgemäß wird eine Anordnung zur Verfügung gestellt, mit der in schneller Folge kontinuierlich Ringkörper automatisch herstellbar sind. Dabei kann ohne Unterbrechung mit gewünschter Geschwindigkeit aus der Teigmasse ein Strang produziert und dieser in Abschnitte unterteilt werden, die sodann ohne manuellen Eingriff zu einem Ring geformt werden, indem jeder Strangabschnitt auf einen drehbaren Teller übergeben wird, der in einem Abschnitt peripher von einer Fördereinrichtung umgegeben ist, die eine Begrenzung bildet mit einem Krümmungsradius, der den Radius des Ringkörpers vorgibt. Durch die Fördereinrichtung wird der Strangabschnitt derart auf der Auflagefläche des Trägerelements geformt, dass die Enden des Strangabschnitts bündig ineinander übergehen, d.h. die Enden im Stumpfstoß derart aufeinanderliegen, dass ein Überstand vermieden wird. Dies gilt auch für mehrsträngige, also zopfartige Strangabschnitte.

Der drehbare Teller sollte passiv drehen, also durch den auf den Teller geförderten Strang gedreht werden.

Dabei verläuft die Auflagefläche geneigt zur Horizontalen, wobei in dem Bereich der Auflagefläche, in dem der tiefste Punkt verläuft, die Fördereinrichtung vorgesehen ist. Durch den Neigungswinkel, die Transportgeschwindigkeit, die Massenträgheit und die Reibung zwischen Teigabschnitt und Auflagefläche wird eine stabilisierte Ringform ermöglicht, ohne dass eine zentripetale Massenverformung auftritt.

Insbesondere ist vorgesehen, dass die Einrichtung zur Herstellung des Materialstrangs eine Knetmaschine in Form z.B. eines Doppelwellenextruders ist, die Material in Form eines Stranges über zumindest eine Austrittsöffnung abgibt.

Die Abgabeeinrichtung kann um eine erste Achse drehbar gelagert sein und vorzugsweise zumindest zwei Austrittsöffnungen aufweisen, so dass ineinander verbundene, also geflochtene oder verdrillte Stränge als Materialstrang abgegeben werden, der sodann in die Strangabschnitte unterteilt wird. Selbstverständlich kann die Abgabeeinrichtung auch mehr als zwei Austrittsöffnungen aufwiesen. Ist nur eine Austrittsöffnung vorhanden, so ist eine Drehbarkeit der Abgabeeinrichtung nicht erforderlich.

Zum Durchtrennen des Materialstrangs ist vorgesehen, dass die Trenneinrichtung quer, vorzugsweise senkrecht oder in etwa senkrecht, zu dem aus der zumindest einen Austrittsöffnung austretenden Materialstrang hin- und herbewegbar ausgebildet ist.

In der hervorzuhebenden Weiterbildung sieht die Erfindung vor, dass mit der Trenneinrichtung ein erster Mitnehmer in Wirkverbindung steht, der auf eine die erste Fördereinrichtung in zwei Längsabschnitte unterteilende Leiteinrichtung derart einwirkt, dass aufeinanderfolgende Strangabschnitte auf verschiedenen Längsabschnitten transportiert werden, ohne dass dabei die Förderung gestaut oder das getrennte Ende verformt wird.

Durch diese Maßnahmen ist ein hoher Durchsatz erzielbar, da abwechselnd ein Strangabschnitt auf einen der Längsabschnitte ablegbar ist, also problemlos ein kontinuierliches Ausstoßen des Materialstrangs aus der Einrichtung zur Herstellung des Materialstrangs möglich ist.

Dabei ist insbesondere vorgesehen, dass jedem Längsabschnitt der ersten Fördereinrichtung ein Trägerelement mit Auflagefläche und einer zweiten Fördereinrichtung zugeordnet ist.

Um ein problemloses Verschwenken der Leiteinrichtung zu ermöglichen, um also aufeinanderfolgende Strangabschnitte einem der Längsabschnitte der ersten Fördereinrichtung zuführen zu können, ist insbesondere vorgesehen, dass die Leiteinrichtung in ihrem dem Trägerelement naheliegenden ersten Endbereich um eine zweite Achse verschwenkbar gelagert ist, dass auf den gegenüberliegenden zweiten Endbereich der erste Mitnehmer direkt oder indirekt einwirkt, wobei vorzugsweise zwischen dem ersten Mitnehmer und der Leiteinrichtung ein Dämpfungselement vorgesehen ist.

Zum Formen des Strangabschnitts zu einem Ring wird das die Auflagefläche aufweisende Trägerelement und die dieses in einem Abschnitt umgebende zweite Fördereinrichtung verwendet. Dabei ist vorgesehen, dass das Trägerelement eine Kreisscheibe aufweist, wobei entlang eines Abschnitts ihres Umfangs der dem Kreisbogenabschnitt folgende Kontaktbereich der zweiten Fördereinrichtung verläuft.

Insbesondere und gleichfalls hervorzuheben ist nach der Erfindung vorgesehen, dass beim Formen des Ringkörpers das Trägerelement mit der Auflagefläche geneigt zur Horizontalen verläuft, wobei im Bereich tiefsten Punkts der Auflagefläche und zu beiden Seiten von diesem die zweite Fördereinrichtung verläuft.

Durch diese konstruktive Gestaltung kann sichergestellt werden, dass der Strangabschnitt zu einem Ring geformt wird und die im Stumpfstoß aufeinanderliegenden Enden ohne Versatz ineinander übergeben.

Um nach der Ausbildung des Rings ein problemloses Entfernen von der Auflagefläche zu ermöglichen, ist bevorzugt vorgesehen, dass das Trägerelement Gasdurchtrittsöffnungen aufweist, deren Öffnungsformen dem Haftverlangen der Ware entgegenwirken.

Um schwerkraftbedingt den Ringkörper von der Auflagefläche zu entfernen kann vorgesehen sein, dass das Trägerelement mit der zweiten Fördereinrichtung zum Ausrichten auf eine dritte Fördereinrichtung kippbar ausgebildet ist.

Zur zusätzlichen Sicherung, dass die gewünschte Ringgeometrie erzielbar ist und die Enden des Strangabschnitts bündig ineinander übergehen, ist nach einem einen eigenerfinderischen Gehalt aufweisenden Vorschlag vorgesehen, dass oberhalb der Auflagefläche ein exzentrisch gelagertes Druckelement mit einer Umfangsfläche zur Druckbeaufschlagung auf den einem Kreisbogen folgenden Strangabschnitt drehbar gelagert ist.

Die zweite Fördereinrichtung kann ein Förderband oder Rollenelemente zur Bildung des Kreisbogenabschnitts aufweisen, entlang dessen der Strangabschnitt gefördert wird.

Die Erfindung bezieht sich auch auf ein Verfahren zur Herstellung eines eine Ringform aufweisenden Körpers aus einem teigförmigen Material, insbesondere eines für ein Backgut bestimmten Teigrings, wie Sesam-Kringel, oder ähnliche Backwaren, umfassend die Verfahrensschritte
- Herstellen eines Materialstrangs,
- Trennen des Materialstrangs in Strangabschnitte,
- Fördern eines Strangabschnitts zu einer Auflagefläche eines drehbar gelagerten Trägerelements mittels einer ersten Fördereinrichtung,
- Fördern des Strangabschnitts entlang eines Kreisbogenabschnitts mittels einer zweiten Fördereinrichtung bei auf der Auflagefläche sich befindenden Strangabschnitt bei gleichzeitigem Mitdrehen des Trägerelements durch Haftung des Strangabschnitts auf der Auflagefläche,
- Drehen des Strangabschnitts um mehr als 360° in Bezug auf den Strangabschnittanfang zum Verbinden der Enden des Strangabschnitts und
- Entfernen des geschlossenen Strangabschnitts von der Auflagefläche.

Dabei ist insbesondere vorgesehen, dass Masse des Strangabschnitts, Radius des Kreisbogenabschnitts und Fördergeschwindigkeit der zweiten Fördereinrichtung derart aufeinander abgestimmt werden, dass ein Verschieben des Strangabschnitts zur Drehachse der Auflagefläche hin unterbunden wird.

Um die Enden des Strangabschnitts auf Stoß miteinander zu verbinden, ist insbesondere vorgesehen, dass der Strangabschnitt um mehr als 360°, vorzugsweise zumindest 400°, besonders bevorzugt zumindest 420°, in Bezug auf den Strangabschnittanfang mit der Auflagefläche gedreht wird.

Um zu vermeiden, dass der geformte Strangabschnitt eine von einer Kreisgeometrie abweichende Form aufweist, zeichnet sich die Erfindung dadurch aus, dass der Materialstrang in Strangabschnitte einer jeweiligen Länge L durchtrennt wird mit L = (2π x R) + X mit R = Radius Kreisbogenabschnitts in Millimeter und X in mm mit X = 0, insbesondere X > 0, besonderes bevorzugt 1 ≤ X ≤ 5.

Insbesondere besteht - gegebenenfalls ergänzend - die Möglichkeit, dass ein exzentrisch gelagertes sich drehendes Druckelement auf den Innenbereich des sich mit der Auflagefläche drehenden Strangabschnitts einwirkt, dessen Kontaktfläche derart gekrümmt ist, dass dem Grunde nach eine von einer Kreisgeometrie abweichende Verformung des zu dem Ring zu formenden bzw. geformten Strangabschnitts unterbleibt. Die Geometrie der Kontaktfläche ist somit konvex bzw. konvexförmig. Das Druckelement ist zumindest im Kontaktbereich mit dem Strangabschnitt rotationssymmetrisch ausgebildet und bevorzugt antriebslos.

Um den Durchmesser des exzentrisch gelagerten Druckelementes zu verändern, kann die Drehachse z.B. in einem in dem Druckkörper vorhandenen Langloch in verschiedenen Positionen fixiert werden. Durch diese Maßnahme wird sichergestellt, dass eine problemlose Anpassung an den Innendurchmesser des Ringkörpers erfolgt, um zusätzlich sicherzustellen, dass ein glatter Übergangsbereich zwischen den miteinander verbundenen Enden des Strangabschnitts bei ausgebildetem Ring gegeben ist.

Um einen hohen Durchsatz zu erzielen, ist vorgesehen, dass die Strangabschnitte auf die erste Fördereinrichtung aufgegeben werden, die mittels einer Leiteinrichtung in zwei oder mehr als zwei Längsabschnitte unterteilt wird, wobei aufeinanderfolgende Strangabschnitte an verschiedene Längsabschnitte der ersten Fördereinrichtung übergeben werden. Somit kann auch bei größeren Gebäcken, die mehr Bearbeitungszeit erfordern können, die Taktzeit beibehalten werden.

Unterschiedliche Radien des herzustellenden Körpers können dadurch erzielt werden, dass der Radius des Kontaktbereichs der zweiten Fördereinrichtung verändert wird. Wird als zweite Fördereinrichtung eine solche verwendet, bei der ein Förderband entlang von Rollenelementen geführt wird bzw. die zweite Fördereinrichtung selbst durch Rollenelemente gebildet wird, können die Rollenelemente zur Drehachse des Drehelementes verstellt werden. Hierzu können Langlöcher vorgesehen sein, in denen die Rollenelement verschoben und sodann fixiert werden können.

Um problemlos den Ringkörper von der Auflagefläche zu entfernen ist vorgesehen, dass nach Ausbilden der Ringform das Trägerelement gekippt wird und der die Ringform aufweisende Körper schwerkraftbedingt, und vorzugsweise durch die Auflagefläche durchströmende Luft unterstützt von der Auflagefläche entfernt, insbesondere an eine dritte Fördereinrichtung übergeben wird. Somit wirken auf den Körper - wenn überhauptnur äußert geringe Verformungskräfte ein.

Beim Formen des Strangabschnitts zu dem Ringkörper verläuft die Auflagefläche geneigt zur Horizontalen, wobei der Strangabschnitt im tiefsten Punkt der Auflagefläche und um diesen herum die zweite Fördereinrichtung kontaktiert und von dieser gefördert wird, wobei durch den Kontakt des Strangabschnitts mit der Auflagefläche diese synchron mitgedreht wird. Die Kontaktfläche bzw. das die Kontaktfläche aufweisende Trägerelement sollte passiv drehbar sein, also nicht selbst angetrieben, sondern wird durch Haftreibung mit dem Strangabschnitt mitgedreht.

Weitere Einzelheiten, Vorteile und Merkmale der Erfindung ergeben sich nicht nur aus den Ansprüchen, den diesen zu entnehmenden Merkmalen - für sich und/oder im Kombination -, sondern auch aus der nachfolgenden Beschreibung eines bevorzugten Ausführungsbeispiels.

Es zeigen:

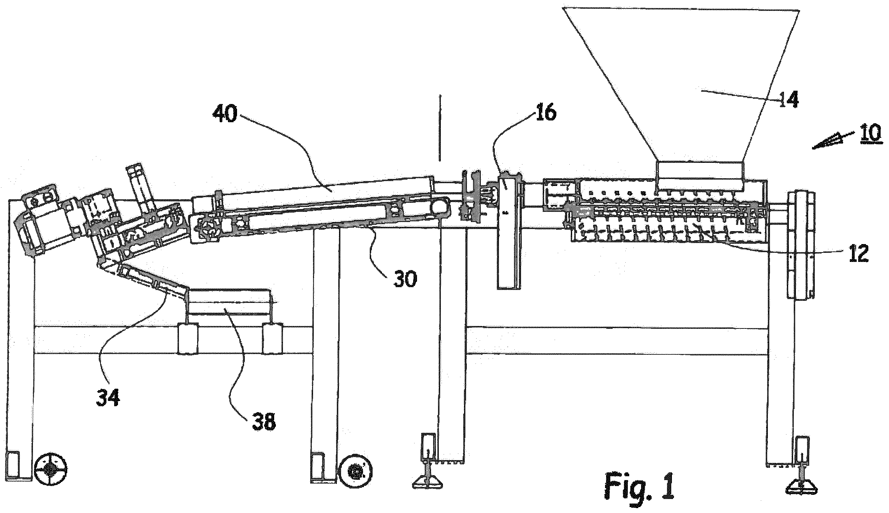

- Fig. 1: eine Seitenansicht einer Anordnung zum Formen eines Ringkörpers,
- Fig. 2: die Anordnung gemäß Fig. 1 in Draufsicht,
- Fig. 3: ein Trägerelement in zwei Positionen,
- Fig. 4: das Trägerelement gemäß Fig. 3 in Draufsicht,
- Fig. 5: eine Trenneinrichtung mit Leiteinrichtung und in Draufsicht,

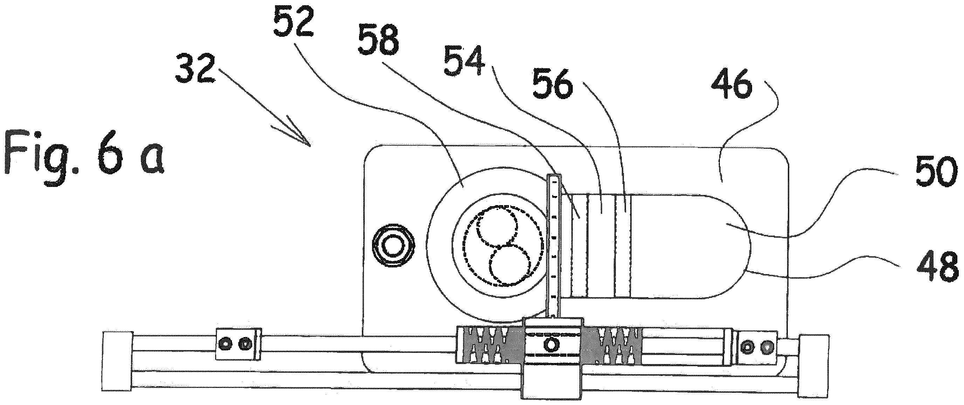

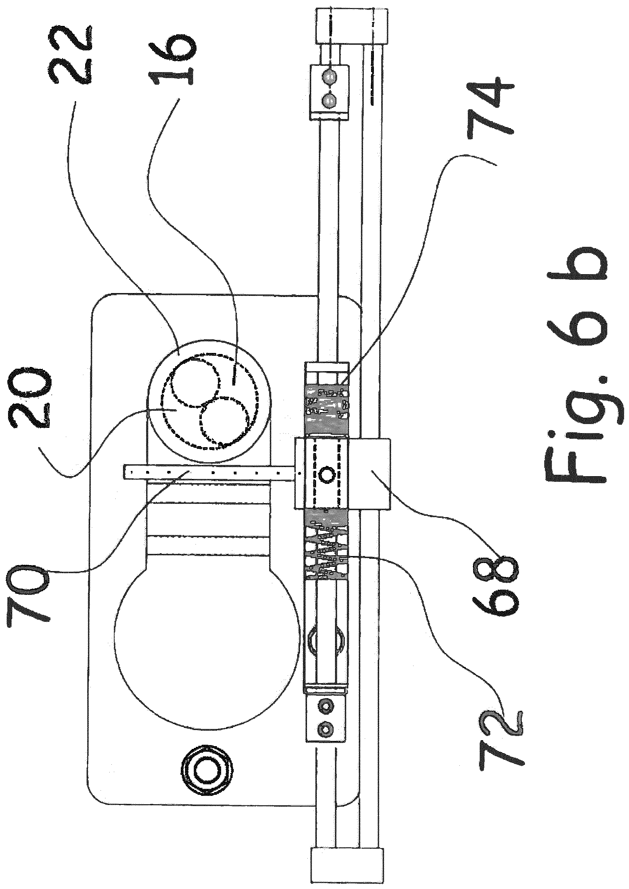

- Fig. 6 a, b: die Trenneinrichtung gemäß Fig. 5 in Vordereinsicht in zwei Positionen und

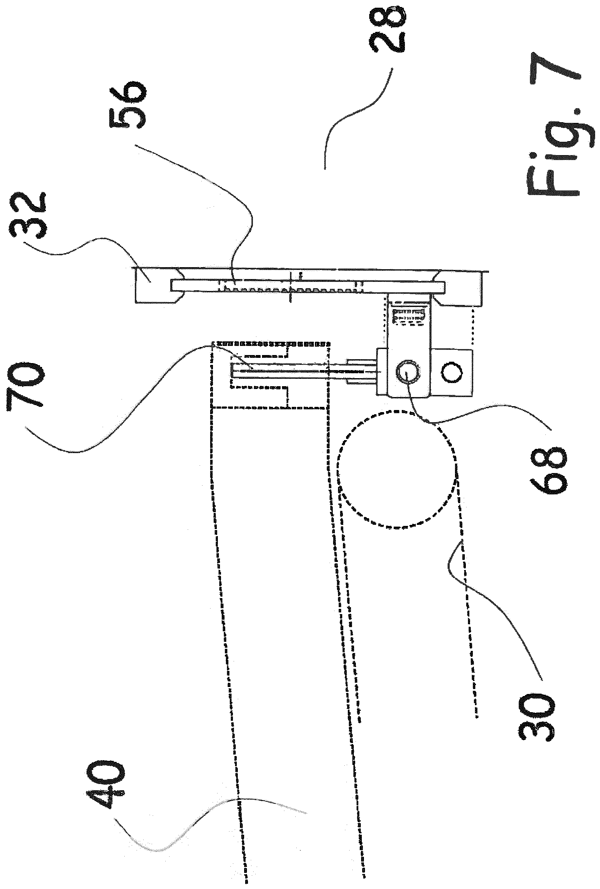

- Fig. 7: die Leiteinrichtung mit Trenneinrichtung gemäß der Fig. 5 und 6.

Anhand der Fig. soll rein prinzipiell eine Anordnung zur Formung eines Ringkörpers, insbesondere eines Teigringes, wie Sesam-Kringel, beschrieben werden. Wird die Erfindung anhand eines Teigrings erläutert, so ist die Erfindung auch für andere teigartige Waren, wie Kunststoffe, anwendbar, ohne dass es weitergehender Erläuterungen bedarf.

Die Anordnung 10 umfasst eine im Ausführungsbeispiel als Doppelextruder ausgebildete Fördereinrichtung 12, der über einen Zuführtrichter 14 der Teig zugeführt wird.

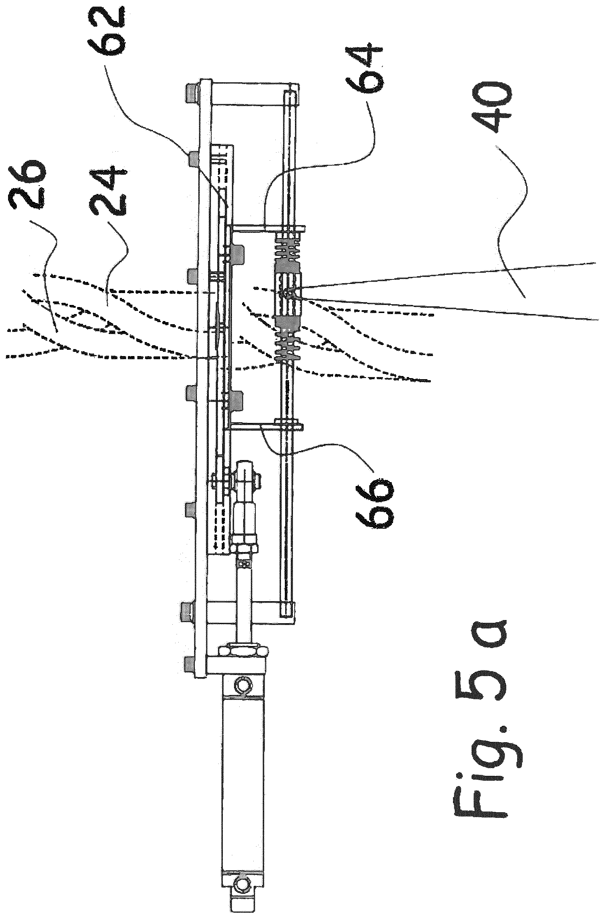

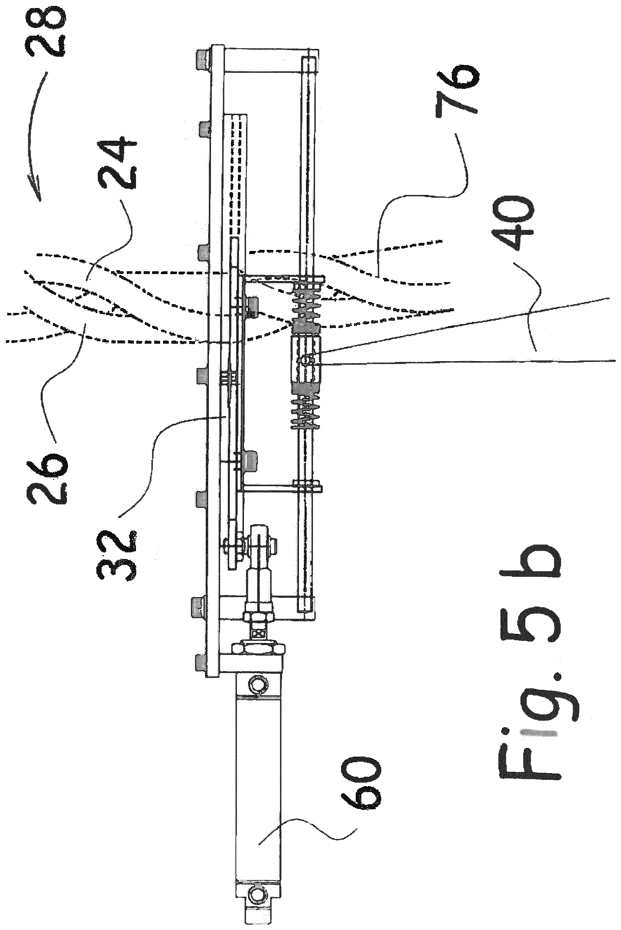

Die Fördereinrichtung 12 ist mit einem als Abgabeeinrichtung dienenden Düsenkopf 16 verbunden, der mittels eines Motors um eine erste Achse drehbar ausgebildet ist. Der Düsenkopf 16 weist austrittsseitig zwei Öffnungen 20, 22 auf, so dass aufgrund der Drehung des Düsenkopfs 16 oder eines die Austrittsöffnungen 20, 22 aufweisenden Aufsatzes ineinander verwundene Teilstränge erzeugbar sind, also geflochten bzw. verdrillt sind, wie dies prinzipiell der Fig. 5 zu entnehmen sind. Die Teilstränge 24, 26 bilden einen als Materialstrang 28 zu bezeichnenden Teigstrang.

Selbstverständlich ist die Erfindung nicht dahingehend begrenzt, dass mehrere Teilstränge bearbeitet werden. Vielmehr bezieht sich die Erfindung gleichfalls auf eine Ausführungsform, bei der nur ein Strang oder mehr als zwei Stränge derart bearbeitet werden, dass sich ein Ringkörper ergibt.

Der Abgabeeinrichtung bzw. dem Düsenkopf 16 ist eine erste Fördereinrichtung in Form eines Transportbandes 30 nachgeordnet, über die mittels einer Trenneinrichtung 32 von dem Materialstrang 28 abgetrennte Strangabschnitte 76 zu einer Formeinrichtung 34 gefördert werden, in der die Strangabschnitte 76 zu einem geschlossenen Ring 36 geformt werden, um sodann z.B. an eine weitere Fördereinrichtung 38 übergeben zu werden.

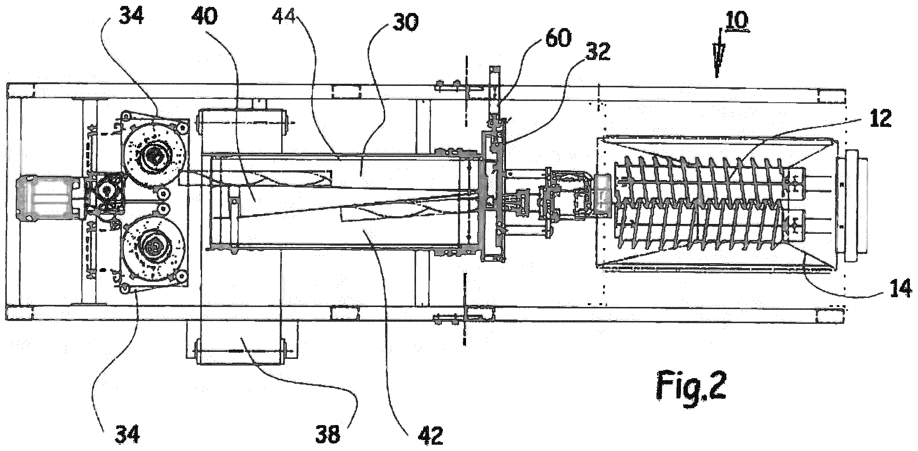

Wie sich aus der Draufsicht gemäß Fig. 2 ergibt, weist die Anordnung 10 insgesamt zwei Formeinrichtungen 34 auf, die jeweils mit dem Bezugszeichen 34 gekennzeichnet sind. Um abwechselnd einen Strangabschnitt einer der Formeinrichtungen 34 zuzuführen, wird das Förderband 30 mittels einer Leiteinrichtung 40 in zwei Längsabschnitte 42, 44 unterteilt, wobei in Abhängigkeit von der Stellung der Leitereinrichtung 40 ein Strangabschnitt einem der Längsabschnitte 42, 44 von der Düseneinrichtung 16 ausgehend und nach Abtrennen des Strangabschnitts mittels der Trenneinrichtung 32 zugeführt wird.

Zwischen der Düseneinrichtung 16 und dem Aufgabebereich, also dem proximalen Bereich des Transportbandes 30, kann eine weitere Einrichtung vorgesehen sein, um z.B. den Materialstrang 28 mit einem gewünschten Material zu ummanteln, wie z.B. mit Mehl Nussraspeln, Getreidesamen und/oder Zucker zu bepudern.

Die Trenneinrichtung 32 weist ein plattenförmiges Basiselement 46 auf, das seinerseits einen schüssellochartigen Ausschnitt aufweist, der sich aus einem langgestreckten ersten Abschnitt 50 und einem eine Kreisgeometrie aufweisenden zweiten Abschnitt 52 zusammensetzt, dessen lichte Weite zu dem Durchmesser des Düsenkopfs16 bzw. des drehbaren die Austrittsöffnungen 20, 22 aufweisenden Bauteils derart dimensioniert ist, dass über den Abschnitt 52 der Düsenkopf 16 bzw. das Bauteil ausgebaut werden kann.

In dem langgestreckten Abschnitt 50 ist ein Schneidelement 54 vorhanden, das zwei Schneiden 56, 58 aufweist, um bei der Hin- und Herbewegung der Trenneinrichtung 32 entweder mit der Schneide 56 oder mit der Schneide 58 von dem aus dem Düsenkopf 16 austretenden Materialstrang 28 einen Strangabschnitt abzutrennen.

Die hin- und herbewegbare Trenneinrichtung 32 wird mittels eines Aktors senkrecht oder im Wesentlichen senkrecht zur Hauptförderrichtung des aus der Düsen- bzw. Abgabeeinrichtung austretenden Materialstrangs 28 bewegt, und zwar z.B. über einen Motor oder Zylinder 60, wie dies rein beispielhaft in der Fig. 5 angedeutet ist.

Von der plattenförmigen die Schneiden 56, 58 aufweisenden Trenneinrichtung 32 geht ein erster Mitnehmer 62 mit Schenkeln 64, 66 aus, der seinerseits auf eine Halterung 68 für einen zweiten Mitnehmer 70 einwirkt, von dem die Leiteinrichtung 40 ausgeht, die kardanisch gelagert ist. Auf die Halterung 68 wirken die Schenkel 64, 66 des ersten Mitnehmers 62 über Dämpfungselemente 72, 74 ein, so dass die Hin- und Herbewegung der Trenneinrichtung 32 auf die Halterung 68 für den zweiten Mitnehmer 70 gedämpft einwirkt. Schläge auf die als Weiche zu bezeichnende Leitreinrichtung 40 werden hierdurch unterbunden. Selbstverständlich kann die Bewegungsfolge auch mittels Elektroantrieben ausgeführt werden.

Wie die Fig. 5a und 5b verdeutlichen, ist in Abhängigkeit von der Stellung der Trenneinrichtung 32 die Leiteinrichtung 40 verstellt. In Fig. 5b hat die Trenneinrichtung 32 die linke Endposition erreicht, um sodann nach rechts bewegt zu werden. Während der Bewegung wird ein Strangabschnitt 76 von dem Materialstrang 28 mittels der Schneide 56 abgetrennt. Da sich der Materialstrang 28 vor dem Trennen auf dem rechten Längsabschnitt 42 des Transportbandes 30 befindet, wird der abgeschnittene Strangabschnitt 76 der in der Fig. 2 dargestellten unteren Formeinrichtung 34 zugeführt. Gleichzeitig wird die Leiteinrichtung 40 nach rechts bewegt, damit der weiterhin geförderte Materialstrang 28 auf den linken Längsabschnitt 44 des Transportbandes 30 aufgegeben werden kann, um sodann beim erneuten Bewegen der Schneideinrichtung 32 nach links mit der Schneide 58 einen Strangabschnitt abzutrennen und diesen über das Förderband 30 entlang dem Längsabschnitt 44 der in der Fig. 2 oberen Formeinrichtung 34 zuzuführen.

Um den der Formeinrichtung 34 zugeführten Teigabschnitt derart zu formen, dass die gewünschte Ringgeometrie erzielbar ist, weist die Formeinrichtung 34 über einen Bogen B < π peripher eine eine passiv drehende Trägerscheibe 78 umgebende zweite Fördereinrichtung 80 auf, deren strangabschnittseitige Begrenzung eine Kreisgeometrie mit einem Bogen aufweist, dessen Radius dem Außenradius des herzustellenden Ringkörpers entspricht.

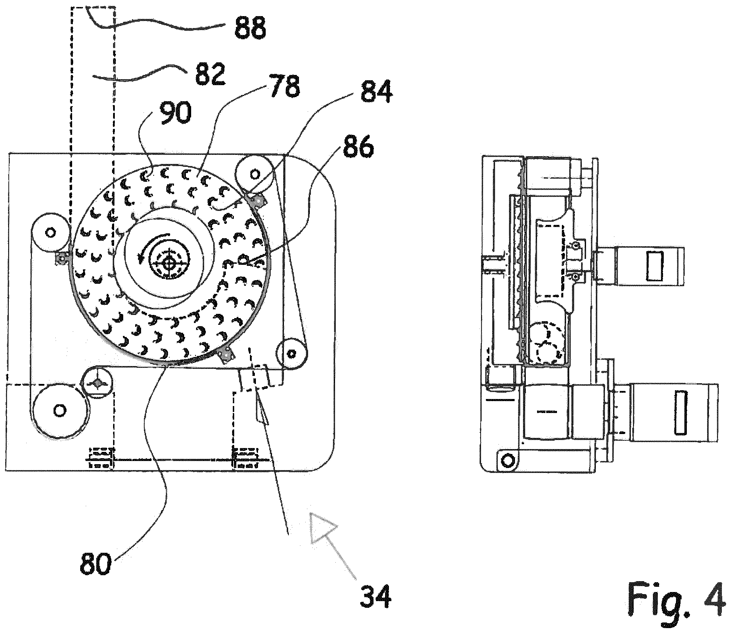

Wie sich aus der Draufsicht von Fig. 4 ergibt, wird ein Strangabschnitt 82 mittels des Transportbandes 30 auf das eine Auflagefläche 84 aufweisende Trägerelement (Trägerscheibe 78) derart übergeben, dass der Strangabschnitt 82 mit der zweiten Fördereinrichtung 80 kontaktiert und somit mittels der zweiten Fördereinrichtung 80 transportiert wird und dabei an die Geometrie der Kontaktfläche der Fördereinrichtung 80 angepasst wird. Durch den Kontakt mit der Auflagefläche 78 dreht sich das Trägerelement mit.

Der Strangabschnitt wird um mehr als 360°, vorzugsweise mehr als 420° in Bezug auf sein vorderes Ende 86 mit dem Trägerelement gedreht, dabei gelangen die Enden 86, 88 des Strangabschnitts 82 in Kontakt zueinander, so dass sich der geschlossene Ring 36 bildet.

Transportgeschwindigkeit des Strangabschnitts 82, Masse des Strangabschnitts 82 und gegebenenfalls Neigungswinkel der Auflagefläche 84 werden derart aufeinander abgestimmt, dass eine zentripetale Massenverformung unterbleibt.

Auch weist der Strangabschnitt 82 eine Länge auf, die geringfügig länger als der mittlere Radius der Form des Rings 36 ist, vorzugsweise 1 - 5 mm länger, bevorzugterweise in etwa 3 mm länger, um eine ideale Kreisform zu erzielen. Hierdurch werden die Enden 86, 88 im gewissen Umfang zusammengepresst und aufgrund der Drehung um mehr als 360° wird sichergestellt, dass die gewünschte Ringgeometrie erzielbar ist.

Bei der Formgebung sollte die Auflagefläche 84 zur Horizontalen einen Winkel α mit vorzugsweise 10° ≤ α ≤ 30°, insbesondere α in etwa 20°, einschließen. Der tiefste Punkt der Auflagefläche 84 verläuft demzufolge fernliegend zu dem distalen Bereich des Förderbandes 30, wie die Zeichnung verdeutlicht.

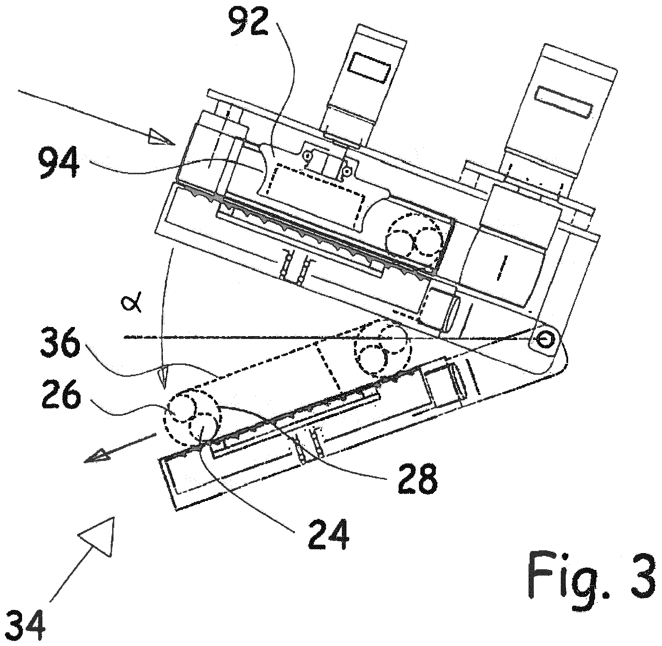

Nach Ausbildung des geschlossenen Ringkörpers wird die Formeinrichtung 34 gekippt (Fig. 3), um sodann schwerkraftbedingt den Ringkörper an die weitere Transport- bzw. Fördereinrichtung 38 zu übergeben. Da das Trägerelement, also die Kreis- oder Trägerscheibe 78 Luftdurchtrittsöffnungen 90 aufweist, kann die Auflagefläche 84 von Luft durchströmt worden, wodurch das Lösen des Ringkörpers von der Auflagefläche 84 erleichtert wird.

Um gegebenenfalls auftretende Abweichungen von der Ringform auszugleichen, erstreckt sich im Mittenbereich der Auflagefläche 84 ein zylinderförmiges Druckelement 92 mit konkav geformter Kontaktfläche 94, die auf die Innenseite des Ringkörpers 36 einwirkt. Dabei ist das Druckelement exzentrisch gelagert, so dass quasi nur ein linienförmiger Kontakt zwischen dem Druckelement 92 und dem Ringkörper 36 parallel zu der Drehachse erfolgt. Die Drehzahl des Druckkörpers oder Druckelements 92 ist auf die Fördergeschwindigkeit der zweiten Fördereinrichtung 80 derart abgestimmt, dass das Druckelement 92 auf die Nahtstelle zwischen den Enden 86, 88 des Strangabschnitts 82 irgendwann einwirkt mit der Folge, dass ein etwaiger Versatz zwischen den Enden 86, 88 behoben wird.

Bei der zweiten Fördereinrichtung 80 kann es sich um ein Förderband oder um z.B. ein steifes Kassettenband, ein Vielfachrollenband oder ein geführtes Kettenstege-Band handeln. Unabhängig von der konstruktiven Lösung stellt die zweite Fördereinrichtung 80 einen Kontaktbereich für den Strangabschnitt 82 zur Verfügung, der einen Kreisbogen bildet, dessen Radius dem Außenradius des zu einem Ring 36 zu formenden Körpers entspricht bzw. diesen vorgibt.

Auf Grund der erfindungsgemäßen Lehre können insbesondere Backwaren, die auch aus zueinander verdrehten Strängen bestehen, in tadelloser Form und schneller Folge kontinuierlich automatisch hergestellt werden. Produktionszeiten von 1,5 bis 3 Sekunden pro Ring sind ohne Weiteres möglich, wobei der Takt von dem Strang- und Ringdurchmesser abhängig ist.

Die die erfindungsgemäße Anordnung bildenden Baugruppen können als Wechselsystem konfiguriert sein, wobei eine Einheit die Kneteinrichtung (Fördereinrichtung 12) mit der Ausgabeeinrichtung (Düsenkopf 16), eine zweite Einheit die erste Fördereinrichtung 30 mit der Leiteinrichtung 40 und die dritte Einheit die Formeinrichtung 34 sind.

Die Teigmasse kann ohne Unterbrechung mit der gewünschten Geschwindigkeit produziert werden. Dabei werden die Fördergeschwindigkeit des Materialstrangs 28 und die Geschwindigkeit der Hin- und Herbewegung der Trenneinrichtung 32 derart aufeinander abgestimmt, dass die Strangabschnitte fugenlos zu einem geschlossenen Ring geformt werden können.

Um diese Abstimmung zueinander zu erzielen, können geregelte Pneumatikzylinder oder hochdynamische Elektroantriebe zum Einsatz gelangen.

Es kann eine Abstimmung des abgetrennten Strangabschnitts zu dem Materialstrang derart erfolgen, dass ein Spalt entsteht, der ein erneutes Aneinanderkleben verhindert und ungeachtet dessen ein seitliches Verschieben des Strangabschnitts ermöglicht, um auf einen der Längsabschnitte 42, 44 des Förderbandes 30 transportiert zu werden, ohne dass die Geschwindigkeit des Transportbandes 30 höher als die der Auszugsgeschwindigkeit des Materialstrangs aus der Abgabeeinrichtung 16 erforderlich ist.

Die Form des Stranges entsteht aus der Fördermenge und der Drehfrequenz der Abgabeeinrichtung für zwei oder mehr Einzelstränge. Diese bilden sodann den Strangabschnitt.

Es besteht die Möglichkeit, die Einheit Kneteinrichtung (Fördereinrichtung 12) mit Materialaustrag über die Abgabeeinrichtung (Düsenkopf 16) und die erste Fördereinrichtung (Transportband 30), über die Strangabschnitte der Formeinrichtung 34 zugeführt werden, auf Grund des Baukastensystems gegebenenfalls zu beabstanden, um Einrichtungen anzuordnen, mittels der z.B. Außenseiten des Materialstrangs 28 bestäubt werden können. Dies kann von Vorteil sein, um z.B. unerwünschte Anhaftprobleme der Strangabschnitte in der Formeinrichtung 34 zu vermeiden.

Des Weiteren sollte die erste Fördereinrichtung (Transportband 30) geneigt verlaufen, d.h., der Ausgabebereich liegt höher als der Abgabebereich zu der Formeinrichtung 34.

Dadurch, dass das Transportband 30 im Ausführungsbeispiel in zwei Transportbereiche, also die Längsbereiche 42, 44 unterteilt wird, ist ein hoher Durchsatz gewährleistet.

Im Vorfeld ist die Strangabschnittlänge mit dem Durchmesser des Ringkörpers abzustimmen, um zu vermeiden, dass Aufwölbungen oder versetzte Überlappungen im Schließbereich oder eine von einem Kreis abweichenden Geometrie entstehen.

Die Erfindung schließt auch die Möglichkeit ein, mehr als 2 Unterteilungen vorzunehmen.

Um die gewünschte Ringgeometrie zu erzielen, ist die Auflagefläche 84 auf dem Trägerelement (Trägerscheibe 78) zur Horizontalen geneigt, wobei die peripher die Trägerfläche umgebende Fördereinrichtung 80 im Bereich der Auflagefläche 84 vorgesehen ist, die im tiefsten Punkt von diesem ausgehend verläuft.

Der Strangabschnitt wird auf Grund des Kontaktes mit der Fördereinrichtung 80 kreisend bewegt, wobei die Rotation durch das als Kreisscheibe zu bezeichnende Trägerelement (Trägerscheibe 78) unterstützt wird, dessen Auflagefläche 84 belüftet werden kann.

Durch den Neigungswinkel der Auflagefläche 84, der Transportgeschwindigkeit mittels der Fördereinrichtung 80 in Abhängigkeit von der Masse des Strangabschnitts unter Berücksichtigung des Reibungsquotienten zwischen Strangabschnitt 82 und Auflagefläche 84 kann sichergestellt werden, dass die gewünschte Kreisgeometrie erzielbar ist und die zentripetale Massenverformung unterbleibt.

Eine problemlose Übergabe des Ringkörpers nach dessen Formung an ein weiteres Transportmittel oder eine sonstige Bearbeitungsstation ist problemlos möglich, da der Ringkörper quasi auf der Auflagefläche 84 durch die in der Auflagefläche 84 vorhandenen Öffnungen 90 und die durch diese hindurchtretende Luft auf einem Luftpolster schwimmt.

## Patentansprüche

1. Anordnung (10) zur Formung eines Ringkörpers, insbesondere Teigrings, wie Sesam-Kringel, umfassend
- eine Einrichtung zur Herstellung zumindest eines Materialstrangs (28),
- eine den zumindest einen Materialstrang in Strangabschnitte (76, 82) unterteilende Trenneinrichtung (32),
- eine sukzessiv Strangabschnitte transportierende erste Fördereinrichtung (30),
- eine der ersten Fördereinrichtung nachgeordnete Formeinrichtung (34) mit einem drehbar ausgebildeten Trägerelement mit Auflagefläche (84) für einen Strangabschnitt (82) und
- eine zweite Fördereinrichtung (80), die für den Strangabschnitt einen einen Kreisbogenabschnitt folgenden und oberhalb der Auflagefläche verlaufenden Kontaktbereich bildet, wobei der Kreisbogenabschnitt einen Krümmungsradius aufweist, der den Außenradius des Ringkörpers vorgibt.

2. Anordnung nach Anspruch 1,
**dadurch gekennzeichnet,**
**dass** die Einrichtung eine Knetmaschine mit einer geknetetes Material in Form des Materialstrangs (28) über zumindest eine Austrittsöffnung (20, 22) abgebenden Abgabeeinrichtung ist, die vorzugsweise um eine erste Achse drehbar ausgebildet ist und insbesondere zumindest zwei Austrittsöffnungen (20, 22) aufweist.

3. Anordnung nach Anspruch 1 oder 2,
**dadurch gekennzeichnet,**
**dass** die Trenneinrichtung (32) quer, vorzugsweise senkrecht oder in etwa senkrecht, zu dem aus der zumindest einen Austrittsöffnung (20, 22) austretenden Materialstrang (28) hin- und herbewegbar ausgebildet ist.

4. Anordnung nach zumindest einem der vorgehenden Ansprüche,
**dadurch gekennzeichnet,**
**dass** mit der Trenneinrichtung (32) ein erster Mitnehmer (62) in Wirkverbindung steht, der auf eine die erste Fördereinrichtung in zwei Längsabschnitte (42, 44) unterteilende Leiteinrichtung (40) derart einwirkt, dass aufeinanderfolgende Strangabschnitte (76) auf verschiedenen Längsabschnitten transportiert werden, wobei vorzugsweise jedem Längsabschnitt (42, 44) der ersten Fördereinrichtung ein Trägerelement mit Auflagefläche (84) und eine zweite Fördereinrichtung (80) zugeordnet ist, und wobei vorzugsweise die Leiteinrichtung (40) in ihrem dem Trägerelement (78) naheliegenden ersten Endbereich um eine zweite Achse verschwenkbar gelagert ist und auf den gegenüberliegenden zweiten Endbereich der erste Mitnehmer (62) direkt oder indirekt einwirkt, wobei vorzugsweise zwischen dem ersten Mitnehmer und der Leiteinrichtung eine Dämpfungselement (72, 74) vorgesehen ist.

5. Anordnung nach zumindest einem der vorgehenden Ansprüche,
**dadurch gekennzeichnet,**
**dass** das Trägerelement eine Kreisscheibe aufweist, wobei entlang eines Abschnitts ihres Umfangs der dem Kreisbogenabschnitt folgende Kontaktbereich der zweiten Fördereinrichtung (80) verläuft.

6. Anordnung nach zumindest einem der vorgehenden Ansprüche,
**dadurch gekennzeichnet,**
**dass** beim Formen des Ringkörpers das Trägerelement mit der Auflagefläche (84) geneigt zur Horizontalen verläuft, wobei im Bereich tiefsten Punkts der Auflagefläche und zu beiden Seiten von diesem die zweite Fördereinrichtung (80) verläuft, die vorzugsweise ein Förderband oder Rollenelemente zur Bildung des Kreisbogenabschnitts aufweist.

7. Anordnung nach zumindest einem der vorgehenden Ansprüche,
**dadurch gekennzeichnet,**
**dass** die Auflagefläche (84) des Trägerelements Gasdurchtrittsöffnungen aufweist, deren Öffnungsformen dem Haftverlangen der Ware entgegenwirken.

8. Anordnung nach zumindest einem der vorgehenden Ansprüche,
**dadurch gekennzeichnet,**
**dass** das Trägerelement mit der zweiten Fördereinrichtung (80) zum Ausrichten auf eine dritte Fördereinrichtung (38) kippbar ausgebildet ist.

9. Anordnung nach zumindest einem der vorgehenden Ansprüche,
**dadurch gekennzeichnet,**
**dass** oberhalb der Auflagefläche (84) ein exzentrisch gelagertes Druckelement (92) mit einer Umfangsfläche zur Druckbeaufschlagung auf den einem Kreisbogen folgenden Strangabschnitt (82) drehbar gelagert ist.

10. Verfahren zur Herstellung eines eine Ringform aufweisenden Körpers aus einem teigförmigen Material, insbesondere eines für ein Backgut bestimmten Teigrings, wie Sesam-Kringel, umfassend die Verfahrensschritte
- Herstellen eines Materialstrangs (28),
- Trennen des Materialstrangs in Strangabschnitte (76, 82),
- Fördern eines Strangabschnitts zu einer Auflagefläche (84) eines drehbar gelagerten Trägerelements mittels einer ersten Fördereinrichtung,
- Fördern des Strangabschnitts entlang eines Kreisbogenabschnitts mittels einer zweiten Fördereinrichtung (80) bei auf der Auflagefläche sich befindenden Strangabschnitt (82) bei gleichzeitigem Mitdrehen des Trägerelements durch Haftung des Strangabschnitts auf der Auflagefläche,
- Drehen des Strangabschnitts um mehr als 360° in Bezug auf den Strangabschnittanfang zum Verbinden der Enden (86, 88) des Strangabschnitts und
- Entfernen des geschlossenen Strangabschnitts von der Auflagefläche.

11. Verfahren nach Anspruch 10,
**dadurch gekennzeichnet,**
**dass** ein exzentrisch gelagertes und sich drehendes Druckelements (92) auf den Innenbereich des mit der Auflagefläche (84) sich drehenden Strangabschnitts (82) einwirkt.

12. Verfahren nach Anspruch 10 oder 11,
**dadurch gekennzeichnet,**
**dass** Masse des Strangabschnitts (76, 82), Radius des Kreisbogenabschnitts und Fördergeschwindigkeit der zweiten Fördereinrichtung (80) derart aufeinander abgestimmt werden, dass ein Verschieben des Strangabschnitts zur Drehachse der Auflagefläche hin unterbunden wird, und/oder dass der Strangabschnitt (82) um mehr als 360°, vorzugsweise zumindest 400°, besonders bevorzugt zumindest 420°, in Bezug auf den Strangabschnittanfang mit der Auflagefläche (84) gedreht wird.

13. Verfahren nach zumindest einem der Ansprüche 10 bis 13,
**dadurch gekennzeichnet,**
**dass** der Materialstrang (28) in Strangabschnitte (76, 82) einer jeweiligen Länge L durchtrennt wird mit L = (2π x R) + X mit R = Radius Kreisbogenabschnitts in Millimeter und X in mm mit X = 0, insbesondere X > 0, besonderes bevorzugt 1 ≤ X ≤ 5.

14. Verfahren nach zumindest einem der Ansprüche 10 bis 13,
**dadurch gekennzeichnet,**
**dass** die Strangabschnitte (76, 82) auf die erste Fördereinrichtung aufgegeben werden, die mittels einer Leiteinrichtung (40) in zumindest zwei Längsabschnitte (42, 44) unterteilt wird, wobei aufeinanderfolgende Strangabschnitte an verschiedene Längsabschnitte übergeben werden

15. Verfahren nach zumindest einem der Ansprüche 10 bis 14,
**dadurch gekennzeichnet,**
**dass** nach Ausbilden der Ringform das Trägerelement gekippt wird und der die Ringform aufweisende Körper schwerkraftbedingt, und vorzugsweise durch die Auflagefläche (84) durchströmende Luft unterstützt, von der Auflagefläche (84) entfernt, insbesondere an eine dritte Fördereinrichtung (38) übergeben wird.
